# EUROPEAN PATENT APPLICATION

(11) **EP 4 715 591 A1**
(43) Date of publication of application: **25.03.2026**
(21) Application number: 24201028.8
(22) Date of filing: 18.09.2024
(51) Int. Cl.: G06F 9/50, H04L 65/1069

(54) **METHOD FOR PROVIDING A COMMUNICATION AND COMPUTING SERVICE SESSION**

(71) Applicant: NTT DOCOMO, INC., Tokyo 100-6150 (JP)
(72) Inventor: NORMANN, Henrik, 80687 Munich (DE); GUERZONI, Riccardo, 80687 Munich (DE); BAKHSHI, Bahador, 80687 Munich (DE); ARFAOUI, Afaf, 80687 Munich (DE); HAMZA, Muhammad, 80687 Munich (DE); YAMAUCHI, Kenta, Tokyo, 100-6150 (JP)
(74) Representative: Viering, Jentschura & Partner mbB Patent- und Rechtsanwälte

(57) **Abstract**

According to one embodiment, a method for providing a communication and computing service session for a mobile terminal by a communication system, the method comprising receiving a request for selection of a service provision profile, requesting a core network of the communication system for information about communication network resources, requesting one or more cloud device controllers for information about cloud resources which cloud devices may provide over interfaces indicated by the core network, selecting a service provision profile for a provision of the communication and computing service session taking into account information received from the core network and information received from the one or more cloud device controllers and initiating provision of the communication and computing service session according to the selected service provision profile.

## Description

The present disclosure relates to methods for providing a communication and computing service communication session.

Various services, like artificial intelligence-based services, e.g. for augmented reality or control, require high computational effort. Therefore, it is desirable to distribute them over multiple devices, in particular for example on cloud devices which may provide high computational power. On the other hand, this requires communication resources, e.g. when results of such a service are needed by a mobile terminal and need to be communicated to the mobile terminal, possibly with a certain quality of service like latency. Processing only on a mobile terminal may however not be possible due to limited computational power on the mobile terminal as well as undesirable energy consumption.

Accordingly, efficient approaches for providing communication and computing services are desirable.

According to one embodiment, a method for providing a communication and computing service session for a mobile terminal by a communication system, the method comprising
- receiving a request for selection of a service provision profile including service requirements
- requesting a core network of the communication system for information about communication network resources the core network can provide for the communication and computing service session to meet the service requirements
- receiving information about communication network resources the core network can provide for the communication and computing service session to meet the service requirements and information about one or more interfaces of the core network via which the core network can provide the communication network resources from the core network

- requesting one or more cloud device controllers for information about cloud resources one or more cloud devices can provide for the communication and computing service session to meet the service requirements via the one or more interfaces
- receiving information about cloud resources the one or more cloud devices can provide for the communication and computing service session to meet the service requirements via the one or more interfaces from the one or more cloud device controllers
- selecting a service provision profile for a provision of the communication and computing service session taking into account the information received from the core network and the information received from the one or more cloud device controllers and
- initiating provision of the communication and computing service session according to the selected service provision profile.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system according to an embodiment.
- Figure 2: illustrates a communication system according to 6G (i.e. sixth generation according to 3GPP (Third Generation Partnership Project).
- Figure 3: shows a data flow diagram for the provision of a communication and computing service session.
- Figure 4: shows a flow diagram for providing a communication and computing service session.
- Figure 5: shows a flow diagram illustrating the determination of a link and computing profile and its association with a PDU (Packet Data Unit) session.
- Figure 6: shows a method for providing a communication and computing service session for a mobile terminal by a communication system.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a communication and computing service session for a mobile terminal by a communication system, comprising receiving a request for selection of a service provision profile including service requirements, requesting a core network of the communication system for information about communication network resources the core network can provide for the communication and computing service session to meet the service requirements, receiving information about communication network resources the core network can provide for the communication and computing service session to meet the service requirements and information about one or more interfaces of the core network via which the core network can provide the communication network resources from the core network, requesting one or more cloud device controllers for information about cloud resources one or more cloud devices can provide for the communication and computing service session to meet the service requirements via the one or more interfaces, receiving information about cloud resources the one or more cloud devices can provide for the communication and computing service session to meet the service requirements via the one or more interfaces from the one or more cloud device controllers, selecting a service provision profile for a provision of the communication and computing service session taking into account the information received from the core network and the information received from the one or more cloud device controllers and initiating provision of the communication and computing service session according to the selected service provision profile.
Example 2 is the method of example 1, wherein the service provision profile specifies a distribution of tasks of the communication and computing service to the one or more cloud devices.
Example 3 is the method of example 1 or 2, wherein the service provision profile specifies a distribution of tasks of the communication and computing service among the mobile terminal, the one or more cloud devices and one or more devices of the core network.
Example 4 is the method of any one of examples 1 to 3, wherein the cloud resources the one or more cloud devices can provide include computational resources and/or storage resources.
Example 5 is the method of any one of examples 1 to 4, wherein the communication network resources the core network can provide include communication resources.
Example 6 is the method of any one of examples 1 to 5, comprising providing, by the core network, a communication session for the communication and computing service session to communicate data between the mobile terminal and the one or more cloud devices (for provision of the communication and computing service session, e.g. to provide computational results to the mobile terminal).
Example 7 is the method of example 6, comprising the core network modifying the communication session according to the selected service provision profile.
Example 8 is the method of example 7, wherein the modifying of the communication session includes updating a communication quality-of-service profile supported between the mobile terminal and a user plane of the core network user plane and/or between the user plane of the core network and the one or more cloud devices and/or includes requesting a control plane of the core network to select a different user plane component for the communication session.
Example 9 is the method of any of examples 6 to 8, wherein the communication session is a Protocol Data Unit session.
Example 10 is the method of any one of examples 1 to 9, comprising mapping the received information about the one or more interfaces of the core network via which the core network can provide the communication network resources to one or more interface identifications of a set of interface identifications known to the one or more cloud device controllers (e.g. to one or more Cloud Location IDs) and using the one or more interface identifications for indicating the one or more interfaces to the one or more cloud device controllers when requesting the one or more cloud device controllers for the information about the cloud resources the one or more cloud devices can provide for the communication and computing service session.
Example 11 is the method of any one of examples 1 to 10, wherein initiating provision of the communication and computing service session according to the selected service provision profile comprises requesting the core network to provide communication network resources according to the selected service provision profile and/or requesting the one or more cloud device controllers to provide cloud resources according to the selected service provision profile.
Example 12 is the method of any one of examples 1 to 11, wherein initiating provision of the communication and computing service session according to the selected service provision profile comprises notifying a component (e.g. an application function) from which the request for selection of a service provision profile was received about the selected service provision profile.
Example 13 is the method of example 12, wherein initiating provision of the communication and computing service session according to the selected service provision profile further comprises notifying the component from which the request for selection of a service provision profile was received about identifications of at least one cloud device which are to provide resources according to the selected service provision profile.
Example 14 is a distributed computing managing component (e.g. implementing an INCF as described in the examples below) of a communication system configured to perform the method of any one of examples 1 to 13.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

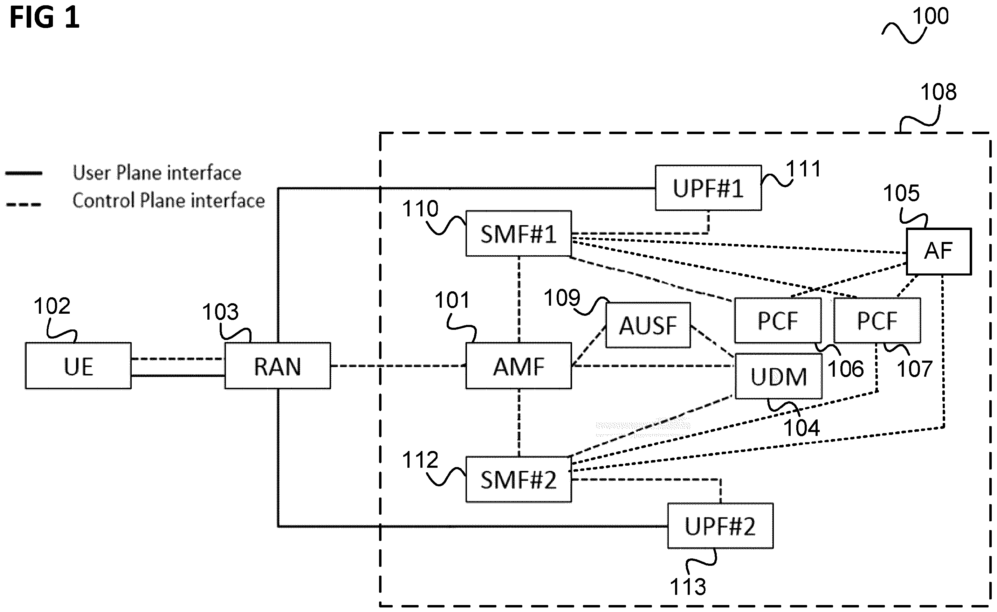

Figure 1 shows a radio (i.e. mobile) communication system 100 configured according to 5G (Fifth Generation).

The radio communication system 100 includes a mobile radio terminal device 102 such as a UE (user equipment), a nano equipment (NE), wireless device and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN), also referred to telecommunication network. The telecommunication network may form the connection between the mobile terminal 102 and other computing devices like edge or cloud devices (e.g. located in the Internet).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application. The core network 119 may include further components such as a Network Data Analytics Function (NWDAF) and a network repository function (NRF), not shown in figure 1. The NWDAF is responsible for providing network analysis and/or prediction information upon request from network functions. For example, a network function may request specific analysis information on the load level of a particular network slice instance. The NRF can be interrogated by any connected network function (e.g. AMF, SMF, PCF) to get information to discover another network function.

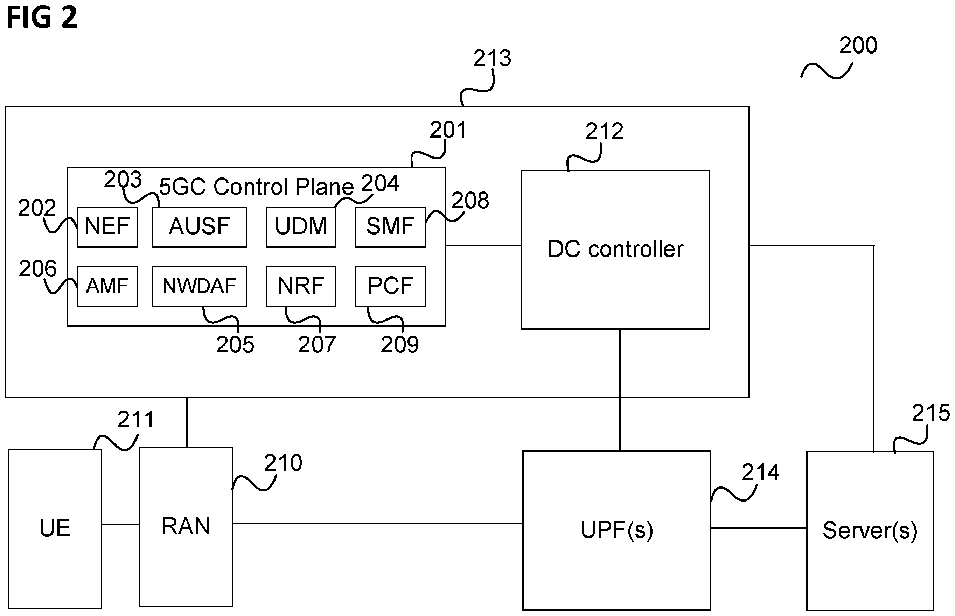

The 5G core network control plane can, together with a Distributed Computing (DC) platform, form the control plane of a 6G core network. This is illustrated in figure 2.

Figure 2 illustrates a communication system 200 (e.g. according to 6G).

For example, the communication system may include a control plane 201. For example, the control plane 201 may be a 5G control plane, a 6G control plane and/or the like.

In an example, the communication system may comprise of a one or more control plane nodes. For example, the control plane may comprise of a first control plane node. For example, the first control plane node may exchange information between the control plane and an application function external to the control plane. For example, the first control plane node may be an NEF 202 and/or the like.

In an example, the control plane may comprise a second control plane node. For example, the second control plane node may authenticate a wireless device (e.g. a mobile terminal 211). For example, authenticate may refer to confirming the wireless device is in possession of a security credential. For example, the security credential may be a key. For example, the key may be a long-term secret. For example, the second control plane node may be an AUSF 203 and/or the like.

In an example, the control plane may comprise a third control plane node. For example, the third control plane node may store a subscription information about a wireless device (e.g. mobile terminal 211). For example, the subscription information may describe a service, a limitation and/or the like the wireless device is allowed to use. For example, the third control plane node may be an UDM 204 and/or the like.

The control plane 201 may have further control plane nodes like the 6G equivalents of an NWDAF 205, an AMF 206, an NRF 207, an SMF 208 and a PCF 209.

The control plane 201 is coupled to a radio access network 210 to which a mobile terminal (UE) 211 is connected. Together with a DC (Distributed Computing) controller 212, the 5GC control plane 201 forms the control plane of the 6G core network 213. One or more UPFs 214 may route the User Plane traffic between the RAN 210 and one or more server computers 215 implementing service processing functions for providing a service, e.g. processing layers of a neural network.

The DC controller 212 for example federates user-side and service-side (e.g. of cloud application) compute resources.

The DC controller 212 e.g. controls DC resources instantiated in the UE 211, the User Plane components (RAN 210 and UPF 214), and the server(s) (e.g. cloud devices) 215. The DC resources may include accelerators (e.g., GPU, FPGA).

An application may also involve computational tasks, like for example for artificial intelligence (i.e. machine learning). Examples include applications for robot control and augmented reality (for a mobile terminal). This may require computation-intensive tasks (and thus also tasks with high energy consumption and/or parallel computing capability). The tasks for such an application may be distributed to multiple components of the communication system 100 (including offloading computation-intensive tasks requiring high energy consumption to network endpoints), such as the UE 102 itself and one or more cloud devices connected to the mobile communication network 103, 108 (and thus to the mobile terminal 102) via a UPF 111, 113.

Thus, providing the application includes performing computational tasks as well as providing a communication service (i.e. providing connectivity) for enabling communication between the components performing these computational tasks. The service provided by the communication system is therefore herein referred to as a communication and computing service (since it includes computational as well as communication tasks).

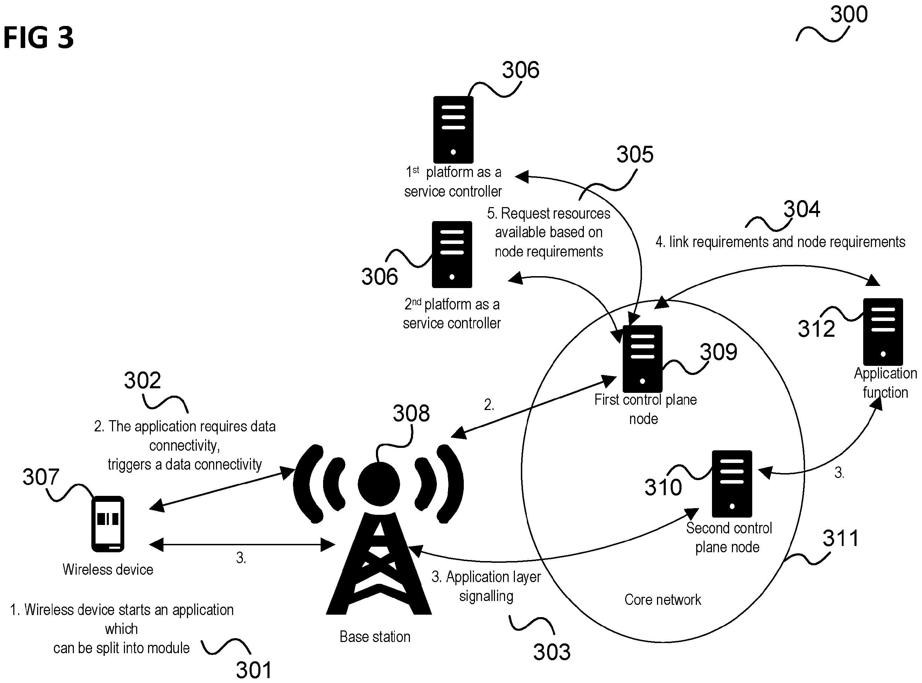

According to various embodiment, the application which requires the communication and computing service, i.e. the application layer, may indicate (service) requirements regarding the communication and computing service, such as latency or response time (e.g. in a real-time application, specifying the time within which a result needs to be provided), a reliability (i.e. a limit of the risk that the service fails) or redundancy level, an accuracy or error rate (e.g. of errors caused by communication errors), metrics for the computing service per node etc. These service requirements, e.g. in the form of or giving rise to link and node requirements, may for example be provided by a mobile terminal (using the application) or an AF (e.g. based on information provided by the mobile terminal), as it is illustrated in figure 3.

Figure 3 shows a data flow diagram 300 for the provision of a communication and computing service session required by a certain application which supports distribution over multiple entities (e.g. computational modules), in particular distribution of at least some tasks to one or more PaaS (platform as a service) devices, in particular cloud devices controlled by one or more PaaS controllers 306. Accordingly, herein, instead of "PaaS controller", also the term "cloud device controller" is used.

In 301, a mobile terminal (i.e. wireless device) 307 starts the application.

In 302, the application (which requires data connectivity, at least for the exchange of data to be processed by the PaaS devices) triggers data connectivity by corresponding signalling to a base station 308 and a first control plane node 309 of a core network 311 (e.g. corresponding to core network 108 and/or core network 119).

In 303, the application then performs application layer signalling via a second control plane node 310 of the core network with an application function (AF) 312. The application may thus inform the application function 312 about requirements of the communication and computing service session. In an example, the AF 312 may determine requirements of the communication and computing service session based on receiving application layer signalling, a type of the communication and computing service session and/or the like. For example, the type may be video, augmented reality, artificial intelligence support and/or the like.

In 304, the application function 312 indicates service requirements (e.g. link and node requirements) to the first control plane node 309 which, in 305, requests PaaS (e.g. cloud) resources from the PaaS controllers 306.

One more control plane network functions, e.g. an SMF may then provide the AF 312 with information about allocated resources (not shown in figure 3 for simplicity).

However, it should be noted that the first control plane node 309 may be unable to request resources based on service (e.g. node) requirements as the first control plane node 309 may lack the capability to understand the service requirements and/or the one or more PaaS controllers 306 may lack the capability to understand the service requirements and/or the capability to associate resources to a data connectivity session (e.g. PDU (packet data unit) session). Furthermore, since data communication between the wireless 307 and the cloud devices providing the cloud resources is necessary, communication (network) resources provided by the core network (which may also include RAN resources) also need to be provided which may, however, be dependent on the interface used between the cloud and the core network.

Accordingly, according to various embodiments, an approach for the coordination between communication system entities for allocation of resources for a communication and computing service session and the association of the resources with a PDU session is provided.

In particular, according to various embodiments, a negotiation of (e.g. computational) resources between different platforms in a unified manner and an association of the resources with a PDU session are enabled. The resources can be used by an AF to deploy application modules, i.e. modules for providing a communication and computing service session for an application.

In the following, examples are described which involve
- an SMF, i.e. a 6GC (6G core network, e.g. 6G core network 213) Session Management Function (like an SMF of the 5GC), e.g. SMF 208
- a PaaS controller, also referred to as CMF (Cloud Management Function) or Distributed Computering Managing Component in the following; this may for example correspond to the DC controller 202 may also be outside the 6G core network 213
- an Application Function (AF), i.e. a controlling component of application layer components, as described above
- an INCF (In Network Compute Function) which performs coordination between SMF, CMF and AF for the purpose of fulfilling service (e.g. link and compute) requirements issued by the AF. The INCF can be seen as a distributed computing managing component.

The functionality of the INCF may be performed:
- by a NF in the 6GC; in this case the functionality of the INCF may be implemented by a new 6GC NF, the 6G SMF (e.g. SMF 208), the 6G NEF (e.g. NEF 202), or the 6G PCF (e.g. PCF 209).
- by a NF in the CMF (e.g. in the DC controller 212).

In particular, the INCF may or may not be part of the 6G core network.

Further, in the following examples, the followings terms are used:
- Network Endpoint (NE): ingress/egress endpoint from the 6GC perspective (with respect to the PaaS devices, e.g. the cloud). An NE may be an N6 interface or a new (i.e. newly defined or introduced) reference point (e.g., an "internal N6") in 6G between the 6G UP and the Distributed Compute (DC) layer.
- Service Endpoint (SE): endpoint of a DC (distributed computing) service component (e.g., K8S Pod) within a PaaS device. The INCF does not need to understand the Service Endpoint, while the AF needs to understand it.
- Cloud Location ID (CLI): shared knowledge between the INCF and the CMF (i.e. the PaaS Controller); the INCF can map an NE to a CLI; the CMF can map a CLI to an SE.

The following scenario is assumed for the following examples: as illustrated in figure 3, a wireless device is connected to a core network via a base station. The wireless device is using an application having high computational requirements, e.g. requiring hardware acceleration. The application can be divided into modules and deployed in a manner distributed over several (compute) nodes. The modules can be deployed on the wireless device, in the access network associated with the core network, in the core network or outside the core network in a cloud environment.

Hardware acceleration may provide a deterministic handling of data packets, reduce jitter and/or reduce delay. A wireless device may use an application split into modules distributed on several nodes over one or several domains requiring different levels of hardware resources to provide acceleration. As technologies evolve a core network can provide coordination of hardware resources to provide acceleration to modules of an application distributed over several domains. The core network may receive node specific requirements from an "owner" of the application (i.e. the Application Function in the present example). For example, the node specific requirements may indicate expected computational load per node. The core network may communicate with cloud environments to find suitable nodes. However, the core network may be unable to translate the expected computational load into a request asking for computational resources to manage the expected computational load.

Various embodiments aid the core network to provide suitable computational nodes for application modules and handle resources. For example, a model to represent computational capabilities and associate these with a data connectivity session are introduced.

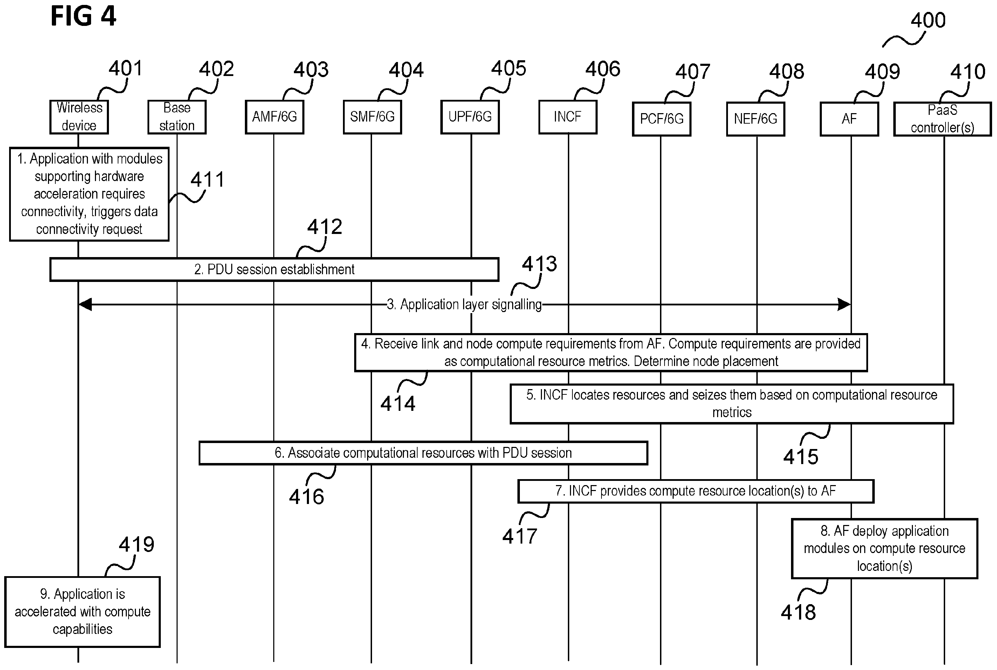

Figure 4 shows a flow diagram 400 for providing a communication and computing service session (i.e. a (communication and computing) session for providing a communication and computing service) for an application (i.e. functions of the application are performed by means of the communication and computing service).

A wireless device 401 (e.g. mobile terminal), a base station 402, an AMF 403, an SMF 404, an UPF 405, an INCF 406, a PCF 407, an NEF 408 an AF 409 and one or more PaaS controllers 410 are involved in the flow. The core network components 403, 404, 406, 407 and 408 are for example components of a 6GC.

In 411, the wireless device 401 starts executing an application (or a function thereof) which requires connectivity for distributed processing and therefore sends a data connectivity request to the network side. In reaction to the request, in 412, a PDU session is established for the wireless device 401.

In 413, application layer signalling is performed between the wireless device 401 and the AF 409, i.e. the application then performs application layer signalling with the AF 409. The application may thus inform the AF 409 about its requirements and thus about requirements of the communication and computing service session.

In 414, the INCF 406 and possibly one or more of the SMF 404, the UPF 405, the PCF 407 and the NEF 408 receive service requirements (e.g. link and node compute requirements) from the AF 409.

In 415, the INCF 406 determines resources and requests (and possibly directly seizes, i.e. triggers their allocation) to fulfil the service requirements. To specify the needed resources, it uses (measurable) metrics for resources (e.g. FLOPS (floating point operations per second), Graphic processing unit (GPU) frequency in Hz, Graphic processing memory capacity and/or a benchmarking score for computational resources, Megabyte for memory, Byte per second for throughput, bit error rate for transmission quality etc.). In other words, involved entities may (commonly) use metrics for resources (e.g. for compute requirements), for example FLOPS. In particular, the INCF 406 can request resources from the one or more PaaS controllers 410 using the metrics. Specification of needed resources may for example be done in form of a resource index having values for multiple different metrics, e.g. an array of resource metrics with one or several fields (one for each metric holding the value of the metric).

The needed resources may also be specified by the AF 409 in the indicated service requirements using the metrics for the resources. It may also partially indicate the needed resources, e.g. by providing an array of (e.g. computational) resource metrics with one or several fields comprising data and some fields missing data. The INCF 406 may then make estimates on the values of the missing fields.

In 416, the AMF 403, the SMF 404, the UPF 405 and/or the INCF 406 associate the determined resources with the PDU session.

In 417, the INCF 406 provides information about the location of at least some of the resources (e.g. of the computational resources) to the AF 409, i.e. about the devices providing them.

In 418, the AF deploys application modules (i.e. software modules implementing the respective parts (e.g. functions) of the application which are distributed) to the locations indicated by the INCF 406.

In 419, the application is executed, for example using capabilities such as hardware acceleration provided by (e.g. cloud) devices other than the wireless device 401.

As explained above, in 414, the AF 409 provides service requirements to the INCF 406 (by means of sending one or more messages to the INCF 406). The message or messages with which the AF 409 provides the service requirements may be seen as (or may explicitly include) a request by the AF 409 for the INCF 406 to determine a service provision (e.g. a link and compute) profile. The INCF 406 may determine the service provision profile by selecting it from a set of link and computing profiles, wherein each link and computing profile corresponds to respective option for splitting the tasks for the communication and computing service.

A link and computing profile defines requirements regarding computational resources of the devices to which the application is distributed, e.g. the mobile terminal, cloud devices but possibly also core network components. It specifies what tasks are performed by which device. Further, the link and computing profile may define a required quality of the link (e.g. a QoS) between the devices, in particular for example the mobile terminal and the core network and the core network and the cloud devices.

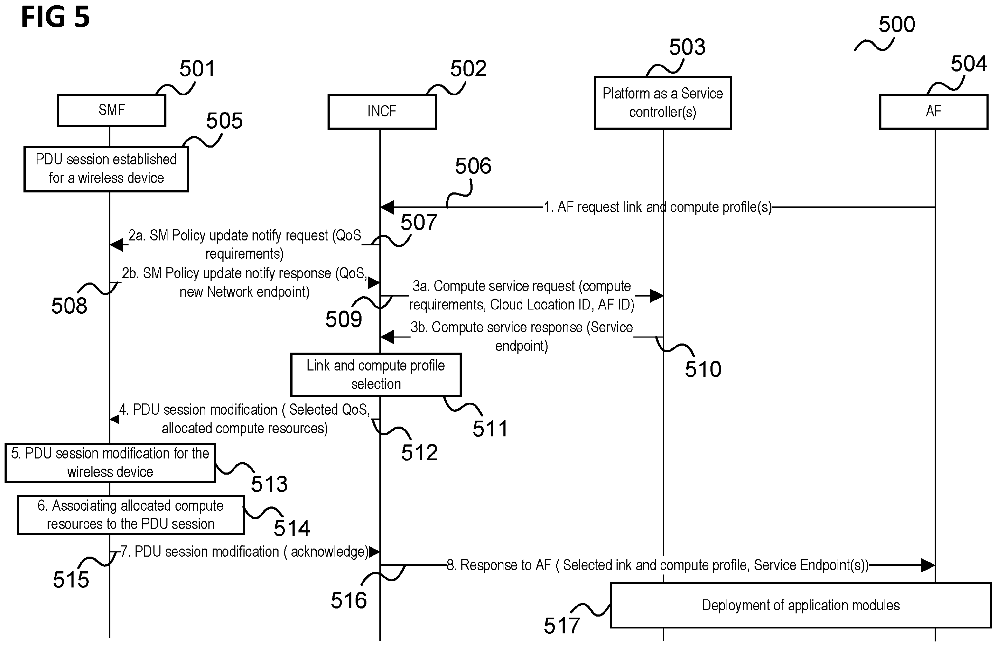

The process for determination of a link and computing profile by the INCF is described in the following in more detail with reference to figure 5.

Figure 5 shows a flow diagram 500 illustrating the determination of a link and computing profile and its association with a PDU session.

An SMF 501 (corresponding to SMF 404), an INCF 502 (corresponding to INCF 406), one or more PaaS controllers 503 (corresponding to PaaS controller(s) 410) and an AF 504 (corresponding to AF 409) are involved in the flow.

Similarly to 412, a PDU session is established in 505.

Further, similarly to 414, the AF 504 provides service requirements to the INCF 502 in 506.

In 507 and 508, the INCF 502 coordinates with the SMF 501 for link aspects and receives a new network endpoint (NE). This includes that the INCF 502 sends a session management (SM) policy request specifying QoS requirements (according to the service requirements) to the SMF 501 in 507 and the SMF 501 responds in 508 with a SM policy response specifying a QoS and the new network endpoint (or multiple network endpoints) via which it can provide the QoS (i.e. one or more network endpoints that the one or more PaaS devices to which application modules are distributed need to use for communication with the core network such that the communication network can provide the QoS).

In 509 and 510, the INCF 502 interacts with the PaaS controller(s) 503 to attempt fulfilling compute requirements (included in the service requirements).

This includes that the INCF 502 sends a compute service request to each PaaS controller 503 in 509 indicating the compute requirements. The compute service request may further include a cloud location ID (specifying one or more PaaS devices which should provide computational resources) and includes an identification of the application function 504.

The one or more PaaS controllers 503 respond with one or more compute service responses which indicate service endpoints of PaaS devices (i.e. of computation services provided by the PaaS devices) which provide computational services according to the compute requirements.

When the INCF 502 has gathered sufficient information in 507 to 510 to take its decision, it selects a service provision profile in 511.

In 512, the INCF 502 then interacts with the SMF 501 to adjust the PDU session. This happens by sending a PDU session modification message which indicates the compute resources allocated according to the selected service provision profile to the SMF 501.

The SMF 501 in 513 then performs PDU session modification (adjustment) according to the selected resources and in 514 associates the allocated resources with the PDU session. This for example means (or includes) that the SMF 501 associates the allocated resources with a session management context. The PDU session modification may also include a UPF reselection.

In 515, the SMF 501 informs the INCF 502 about the PDU session modification.

In 516, the INCF 502 informs the AF 504 about the selected service provision profile and about the service endpoint(s) which let the AF 504 know where it may deploy modules of the application. The AF 504 in 517 then contacts the PaaS controllers 503 to request allocation of the resources to be provided by the PaaS devices according to the selected service provision profile. For this, it for example sends a respective application configuration request message to each PaaS controller 503 indicating for example an application module to be implemented by one or more PaaS devices controlled by the PaaS controller 503 and/or one or more functions of the application to be implemented by one or more PaaS devices controlled by the PaaS controller 503. Each PaaS controller 503 configures the respective one or more PaaS devices (it controls) accordingly and responds to the AF 504 with an application configuration response message confirming the request (i.e. including a confirmation indication).

The INCF 502 may also attempt to seize resources immediately instead of performing two steps (i.e. the INCF 502 can seize resources on behalf of the AF 504 by communicating with the PaaS controller(s) 503, e.g. the INCF 502 may directly allocate the resources in 509 and 510 instead of informing the AF 504 and the AF 504 performing the allocation).

So, the INCF for example performs the following:
1) INCF operation start
2) Receive service (e.g. link and node compute) requirements
3) Determine node placement based on service requirements
4) Find nodes with (e.g. compute) resources
5) Seize resources
6) Associate resources with PDU session (e.g. by informing an SMF accordingly)
7) Send location of seized resources
8) INCF operation end

The SMF 501 may inform an AMF about allocated resources (associated with the PDU session), e.g. by sending an Nsmf_PDUSession_SMContextStatusNotify (to which the AMF responds with a Nsmf_ PDUSession_SMContextStatusNotify response (including an acknowledgement)).

It should be noted that while the resources are computational resources in the above example, the resources may also include other resources, e.g. storage resources which are for example needed for an application module to function and are e.g. offered by cloud devices. These may be allocated by the INCF 502 to fulfil storage requirements included in the service requirements.

The communication network may have information, e.g. as part of wireless device session management subscription data and/or Session Management subscription data, about the possibility of a distribution of the application used by the wireless device. This may for example include one or more of
- Information about whether distribution (e.g. computational acceleration, network computation, usage of dedicated (external) resources) is supported for the wireless device
- An indication of a maximum allowed allocated computational acceleration resources per PDU session/S-NSSAI/DNN for the wireless device (e.g. according to its subscription)
- An indication of which resource metrics are supported by or for the wireless device, e.g., FLOPS/GPU memory/GPU speed and/or the like.

This information may for example be stored in a UDM as part of the wireless device's subscription data.

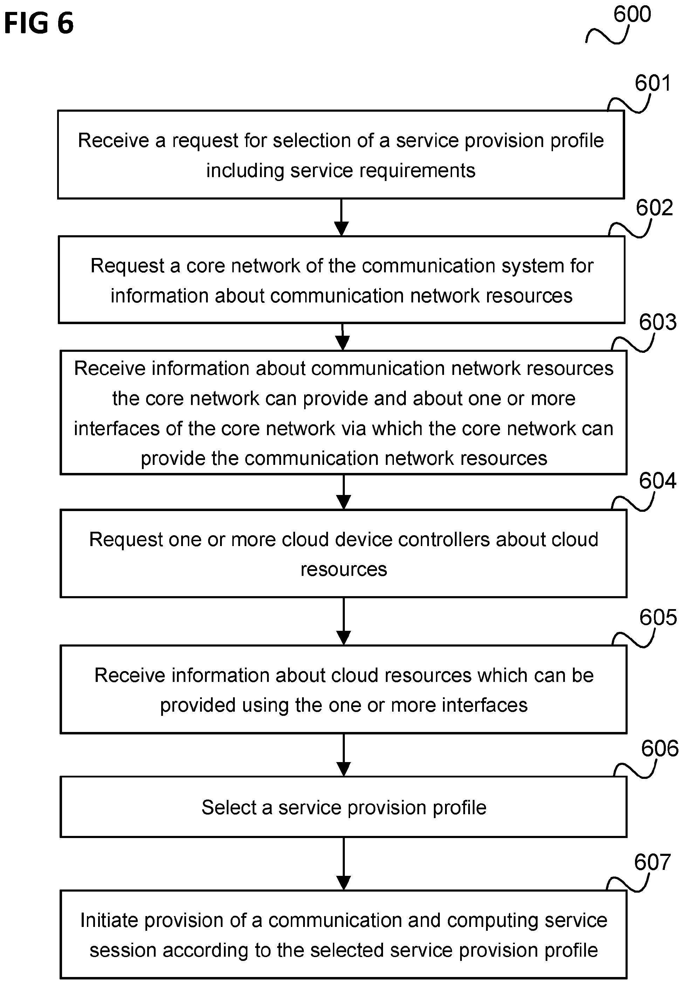

In summary, according to various embodiments, a method is provided as illustrated in figure 6.

Figure 6 shows a method for providing a communication and computing service session for a mobile terminal by a communication system.

In 601, a request for selection of a service provision profile including service requirements is received. The request may be in the form of one or more messages which specify service requirements (implicitly or explicitly indicating that selection of a service provision profile is requested). It is possible that multiple alternative service requirements are specified (i.e. e.g. an application function may specify multiple alternative requirements for a session). The service requirements may be or include explicit resource requirements or resource requirements may be derivable from them. A service provision profile (e.g. a link and compute profile) specifies resources provided by different entities of the communication system including e.g. a mobile terminal (for which the communication and computing service session is to be provided, one or more entities of a core network and one or more cloud devices (i.e. PaaS devices).

In 602, a core network of the communication system is requested for (i.e. to provide) information about communication network resources the core network can provide for the communication and computing service session to meet the service requirements (this may refer to service requirements which the core network can help to meet, e.g. with respect to latency and throughput).

In 603, information about (e.g. about which) communication network resources the core network can provide for the communication and computing service session to meet the service requirements and information about (e.g. indications or identifications of) one or more interfaces of the core network via which the core network can provide the communication network resources (referred to as network endpoints in the examples described above; i.e. receiving the information requested from the core network and additionally information about interfaces under which they may be used) are received from the core network.

In 604, one or more cloud device controllers (i.e. PaaS controllers or cloud management functions) are requested for information about (e.g. about which) cloud resources one or more cloud devices can provide for the communication and computing service session to meet the service requirements via the one or more interfaces (i.e. cloud resources the one or more cloud devices can provide in such a way that the core network can access them via the one or more interfaces). These cloud resources may in particular be computational resources, e.g. provided by dedicated hardware, i.e. hardware accelerators, such as GPUs).

In 605, information about cloud resources the one or more cloud devices can provide for the communication and computing service session to meet the service requirements via the one or more interfaces is received from the one or more cloud device controllers (i.e. the requested information is received from the one or more cloud devices).

In 606, a service provision profile for a provision of the communication and computing service session is selected taking into account the information received from the core network and the information received from the one or more cloud device controllers (i.e. in a manner such that the service requirements can be fulfilled, e.g. from a predefined set of service provision profiles).

In 607, provision of the communication and computing service session is initiated according to the selected service provision profile.

According to various embodiments, in other words, a negotiation of resources for distributed processing is performed which includes communication network service resources as well as cloud resources and takes into account the interfaces over which they may work together. Thus, resources may be negotiated even if the resources the communication network can provide depend on the interface via which the communication resource provides the resources, i.e. to which connection points to the cloud devices it can provide the communication networks.

Thus, the approach of figure 6 allows negotiating resources over multiple platforms in a unified manner and keeping track of resources (for accelerated processing) used by a wireless device.

In the various requests and the responses, the resources may be specified using one or more measurable metrics. These may also be used to keep track of resources associated with a communication session (e.g. PDU session) used for providing the communication and computing service session. Hence, the approach of figure 6 enables the in-network compute use case.

For example, acceleration capabilities may be coordinated (e.g. based on a common resource model, i.e. metrics) to represent computational capabilities and/or associate said capabilities with a PDU session.

The method of figure 6 is for example carried out by distributed computing managing component which may be implemented by one or more computing devices (each including a processor, a memory and interfaces), i.e. the method of figure 6 is implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a communication and computing service session for a mobile terminal by a communication system, comprising:
Receiving a request for selection of a service provision profile including service requirements;
Requesting a core network of the communication system for information about communication network resources the core network can provide for the communication and computing service session to meet the service requirements;
Receiving information about communication network resources the core network can provide for the communication and computing service session to meet the service requirements and information about one or more interfaces of the core network via which the core network can provide the communication network resources from the core network;
Requesting one or more cloud device controllers for information about cloud resources one or more cloud devices can provide for the communication and computing service session to meet the service requirements via the one or more interfaces;
Receiving information about cloud resources the one or more cloud devices can provide for the communication and computing service session to meet the service requirements via the one or more interfaces from the one or more cloud device controllers;
Selecting a service provision profile for a provision of the communication and computing service session taking into account the information received from the core network and the information received from the one or more cloud device controllers; and
Initiating provision of the communication and computing service session according to the selected service provision profile.

2. The method of claim 1, wherein the service provision profile specifies a distribution of tasks of the communication and computing service to the one or more cloud devices.

3. The method of claim 1 or 2, wherein the service provision profile specifies a distribution of tasks of the communication and computing service among the mobile terminal, the one or more cloud devices and one or more devices of the core network.

4. The method of any one of claims 1 to 3, wherein the cloud resources the one or more cloud devices can provide include computational resources and/or storage resources.

5. The method of any one of claims 1 to 4, wherein the communication network resources the core network can provide include communication resources.

6. The method of any one of claims 1 to 5, comprising providing, by the core network, a communication session for the communication and computing service session to communicate data between the mobile terminal and the one or more cloud devices.

7. The method of claim 6, comprising the core network modifying the communication session according to the selected service provision profile.

8. The method of claim 7, wherein the modifying of the communication session includes updating a communication quality-of-service profile supported between the mobile terminal and a user plane of the core network user plane and/or between the user plane of the core network and the one or more cloud devices and/or includes requesting a control plane of the core network to select a different user plane component for the communication session.

9. The method of any of claims 6 to 8, wherein the communication session is a Protocol Data Unit session.

10. The method of any one of claims 1 to 9, comprising mapping the received information about the one or more interfaces of the core network via which the core network can provide the communication network resources to one or more interface identifications of a set of interface identifications known to the one or more cloud device controllers and using the one or more interface identifications for indicating the one or more interfaces to the one or more cloud device controllers when requesting the one or more cloud device controllers for the information about the cloud resources the one or more cloud devices can provide for the communication and computing service session.

11. The method of any one of claims 1 to 10, wherein initiating provision of the communication and computing service session according to the selected service provision profile comprises requesting the core network to provide communication network resources according to the selected service provision profile and/or requesting the one or more cloud device controllers to provide cloud resources according to the selected service provision profile.

12. The method of any one of claims 1 to 11, wherein initiating provision of the communication and computing service session according to the selected service provision profile comprises notifying a component from which the request for selection of a service provision profile was received about the selected service provision profile.

13. The method of claim 12, wherein initiating provision of the communication and computing service session according to the selected service provision profile further comprises notifying the component from which the request for selection of a service provision profile was received about identifications of at least one cloud device which are to provide resources according to the selected service provision profile.

14. A distributed computing managing component of a communication system configured to perform the method of any one of claims 1 to 13.
